(19) Europäisches Patentamt
European Patent Office
Office européen des brevets

(11) **EP 3 623 096 B1**

(12) **EUROPEAN PATENT SPECIFICATION**

(45) Date of publication and mention
of the grant of the patent:
**06.05.2026 Bulletin 2026/19**

(21) Application number: **18858804.0**

(22) Date of filing: **18.09.2018**

(51) International Patent Classification (IPC):
**B23K 26/348** (2014.01)      **B23K 35/30** (2006.01)
**B23K 9/173** (2006.01)      **B23K 28/02** (2014.01)

(52) Cooperative Patent Classification (CPC):
**B23K 9/173; B23K 26/348; B23K 28/02;
B23K 35/30**

(86) International application number:
**PCT/JP2018/034363**

(87) International publication number:
**WO 2019/059149 (28.03.2019 Gazette 2019/13)**

(54) **LASER-ARC HYBRID WELDING METHOD**

LASERLICHTBOGEN-HYBRID-SCHWEISSVERFAHREN

PROCÉDÉ DE SOUDAGE HYBRIDE AU LASER À L'ARC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2017 JP 2017179695**

(43) Date of publication of application:
**18.03.2020 Bulletin 2020/12**

(73) Proprietor: **JFE Steel Corporation**
**Tokyo 100-0011 (JP)**

(72) Inventors:
• **IWATA, Shohei**
**Tokyo 100-0011 (JP)**
• **OKITA, Yasuaki**
**Tokyo 100-0011 (JP)**
• **KITANI, Yasushi**
**Tokyo 100-0011 (JP)**

(74) Representative: **Haseltine Lake Kempner LLP**
**Bürkleinstrasse 10**
**80538 München (DE)**

(56) References cited:
**WO-A1-2010/061422      WO-A1-2013/179614
JP-A- 2004 249 353      JP-A- 2005 219 062
JP-A- 2005 270 995      JP-A- 2006 075 847
JP-A- 2015 526 295      JP-B2- 5 294 573
US-A1- 2009 261 085**

• **LIU SHUANGYU ET AL: "Experimental
investigation on arc characteristic and droplet
transfer in CO2laser-metal arc gas (MAG) hybrid
wel", INTERNATIONAL JOURNAL OF HEAT AND
MASS TRANSFER, ELSEVIER, AMSTERDAM,
NL, vol. 62, 11 April 2013 (2013-04-11), pages 604
- 611, XP028590920, ISSN: 0017-9310, DOI:
10.1016/J.IJHEATMASSTRANSFER.2013.03.051**

**Description**

Technical Field

The present invention relates to a laser-arc hybrid welding method of performing welding by combining laser welding and gas-shielded arc welding. Specifically, the present invention relates to a laser-arc hybrid welding method that suppresses spatter formation by controlling the diameter of droplets that are transferred from a steel welding wire to a molten pool generated by the gas-shielded arc welding as well as by controlling the length of an arc (hereinafter, referred to as "arc length").

Background Art

Laser welding can increase a welding speed and a penetration depth due to the use of a laser beam with high energy density as a heat source and can reduce thermal effects and/or thermal deformation associated with welding due to its narrow melt width. As a result, laser welding has an advantage that a high-quality weld is obtained. Meanwhile, laser welding uses an expensive apparatus and also requires accurate processing in groove formation. Accordingly, laser welding is disadvantageous in terms of costs of performing welding, compared with conventional welding techniques.

In contrast, gas-shielded arc welding is inferior in welding speed and penetration depth to laser welding and is subjected to larger thermal effects and/or thermal deformation associated with welding than laser welding. Meanwhile, gas-shielded arc welding can lower costs of performing welding. In addition, there are advantages that the composition of weld metal can be controlled by adjusting the components of a steel welding wire to be used (see Patent Literature 1) and further, accuracy required for groove processing is not as high as laser welding.

A welding technique that utilizes both advantages of such laser welding and gas-shielded arc welding is laser-arc hybrid welding in which the surfaces of works being welded (steel sheets, for example) are simultaneously irradiated with a gas-shielded arc and a laser beam. Since it is possible to enhance welding gap tolerance and increase a welding speed, laser-arc hybrid welding is a welding technique that can enhance welding efficiency.

In general, an important factor that affects spatter formation in gas-shielded arc welding is the transfer mode of droplets. The mode of droplets transferred from a steel welding wire to a molten pool varies depending on various welding conditions, such as the components of a steel welding wire, the type of a shielding gas, and a welding current for generating an arc.

In other words, when an arc is solely used as a heat source as in gas-shielded arc welding, spatter is formed, for example, by discontinuance of a short-circuiting between droplets and a molten pool or by detachment of droplets outside a molten pool. Accordingly, the amount of formed spatter largely depends on the transfer mode of droplets (i.e., the mode in which droplets are detached from a steel welding wire).

Meanwhile, in laser-arc hybrid welding in which welding is performed by combining laser welding and gas-shielded arc welding, it is known that a lot of spatter is formed since droplet transfer becomes unstable due to interactions between a laser beam and an arc as heat sources. However, the effects of droplet transfer modes on spatter formation have not yet been clearly explained.

When a lot of spatter is formed during performing laser-arc hybrid welding, such spatter is attached to a welding machine body and peripheral optical devices, thereby causing malfunction of facilities and low welding efficiency. Accordingly, it is necessary to suppress spatter formation as much as possible.

For this reason, the present inventors closely investigated droplet transfer modes when laser-arc hybrid welding is performed with leading laser welding and trailing MAG welding as gas-shielded arc welding. As a result, it was found that spatter formation is caused by small and lightweight droplets transferred from the sharp leading end of a steel welding wire to a molten pool and found that such droplets are scattered upward due to laser irradiation-induced evaporation pressure of works being welded and then cooled to form spatter.

Next, the present inventors performed the laser-arc hybrid welding method disclosed in Patent Literature 1 and closely investigated the transfer mode of droplets. Specifically, in the laser-arc hybrid welding method, laser welding was combined with electrode negative gas-shielded arc welding in which a steel welding wire formed of a steel wire added with a rare earth element (hereinafter, referred to as REM) was used as a negative electrode in a shielding gas containing 60 volume% or more of $CO_2$. As a result, in the laser-arc hybrid welding disclosed in Patent Literature 1, scattering of droplets due to laser irradiation was not observed, but spatter was formed due to the short arc length and resulting short-circuiting between droplets and a molten pool. Further, in this laser-arc hybrid welding, globular transfer occurred under low current value conditions (welding current of about 200 A), thereby forming an extremely large amount of spatter. This means that an applicable welding current has to be controlled to a relatively high value from a viewpoint of suppressing spatter formation. Consequently, there is a problem of increased thermal effects and/or thermal deformation associated with welding.

Meanwhile, the International Institute of Welding (IIW) defines transfer modes of droplets as follows. A mode in which droplets larger than a steel welding wire are transferred is defined as globular transfer, where a lot of spatter is formed. A mode in which droplets smaller than a steel welding wire are transferred is defined as spray transfer, where little spatter is formed. Moreover, as spray transfer, a case in which droplets are regularly transferred one by one is defined as projected transfer, and a case in which small droplets are transferred as a stream from the sharp leading end of a steel welding wire is defined as streaming transfer (see Non Patent Literature 1).

Citation List

Patent Literature

PTL 1: Japanese Unexamined Patent Application Publication No. 2005-219062
PTL 2: JP 2006 075847 A relates to a laser-arc hybrid welding method of performing welding by combining leading laser welding and trailing gas-shielded arc welding, in the gas-shielded arc welding, a shielding gas containing 60 volume% or more of Ar and a steel welding wire are used.

Non Patent Literature

NPL 1: Classification of Metal Transfer on arc electric welding processes, IIW Doc. XII-636-76 (1976)

Technical Problem

An object of the present invention is to provide a laser-arc hybrid welding method that resolves problems in conventional techniques and that can considerably suppress spatter formation by controlling the transfer mode of droplets and can reduce thermal effects and/or thermal deformation associated with welding by setting to a low welding current.

Solution to Problem

The present inventors intensively studied a welding method that reduces the amount of formed spatter in laser-arc hybrid welding by focusing on the transfer mode of droplets. As a result, the present inventors obtained the following findings.
Especially, spatter formed in laser-arc hybrid welding is broadly classified into two types:

(a) spatter formed from lightweight droplets scattered in the air due to laser irradiation-induced evaporation pressure of metal; and
(b) spatter formed when short-circuiting between droplets and a molten pool discontinues.

To prevent spatter of (a) above, it is needed to impart a certain weight or more (i.e., a weight not to float in the air) to droplets to be transferred from the tip of a steel welding wire to a molten pool.
Moreover, to prevent spatter of (b) above, it is needed to extend the arc length, thereby preventing short-circuiting.
The present invention has been accomplished by providing the method according to claim 1 on the basis of the above findings.
Specifically, the present invention is a laser-arc hybrid welding method of performing welding by combining laser welding and gas-shielded arc welding, where a minimum diameter $D_{MIN}$ (mm) of droplets that are transferred from a steel welding wire to a molten pool generated by the gas-shielded arc welding satisfies expression (1) relative to a power $P$ (kW) of a laser beam generated by the laser welding; and a maximum diameter $D_{MAX}$ (mm) of the droplets satisfies expression (2) relative to a length $M$ (mm) of an arc generated by the gas-shielded arc welding.

$$D_{MIN} \geq (P/15) + (1/2) \quad (1)$$

$$M \geq 4D_{MAX}/3 \quad (2)$$

In the laser-arc hybrid welding method of the present invention, it is preferable in the gas-shielded arc welding to use a shielding gas containing 60 volume% or more of Ar; to use a steel welding wire formed of a steel wire containing 0.015 to 0.100 mass% of REM; and to perform electrode negative welding.

Advantageous Effects of Invention

According to the present invention, it is possible in a laser-arc hybrid welding method to considerably suppress spatter formation and also reduce thermal effects and/or thermal deformation associated with welding. Consequently, industrially remarkable effects are exerted.

Brief Description of Drawings

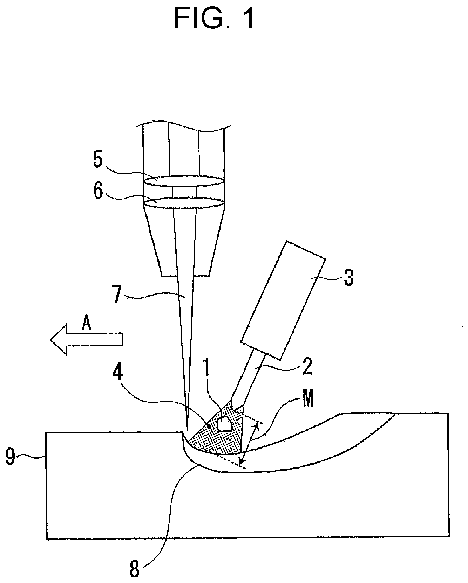

[Fig. 1] Fig. 1 is a schematic view illustrating the configuration of laser-arc hybrid welding according to an embodiment of the present invention.

Description of Embodiments

Fig. 1 is a schematic view illustrating the configuration of laser-arc hybrid welding according to an embodiment of the present invention. The reference signs in Fig. 1 represent a droplet by 1, a steel welding wire by 2, a torch by 3, an arc by 4, a focusing lens by 5, a protective lens by 6, a laser beam by 7, a molten pool by 8, and a steel sheet by 9. The arrow A shows the welding direction. The reference sign M is the arc length. Here, the laser beam 7 is emitted almost in the vertical direction relative to a weld line not shown in the steel sheet 9, and the arc 4 is generated in the slanting direction, thereby forming the molten pool 8.

To reduce the amount of formed spatter in the laser-arc hybrid welding of the present invention in which welding is performed by combining laser welding and gas-shielded arc welding, a minimum diameter $D_{MIN}$ (mm) of droplets transferred from a steel welding wire to a molten pool generated by the gas-shielded arc welding needs to satisfy the following expression (1) relative to a power P (kW) of a laser beam generated by the laser welding.

$$D_{MIN} \geq (P/15) + (1/2) \quad (1)$$

When the minimum diameter $D_{MIN}$ (mm) of transferred droplets does not satisfy expression (1) (i.e., when $D_{MIN}$ is less than the value in the right-hand side), the minimum diameter $D_{MIN}$ of droplets is excessively small. Consequently, such small and lightweight droplets are scattered by laser irradiation-induced evaporation pressure, thereby forming spatter. Meanwhile, when the power of a laser beam increases, evaporation pressure increases. As a result, not only lightweight droplets, but also heavy droplets are scattered. Accordingly, to prevent spatter of (a) above, an adjustment is needed to satisfy expression (1), which is an indicator for assessing interactions between the power P of a laser beam and the minimum diameter $D_{MIN}$.

The upper limit of the minimum diameter $D_{MIN}$ of transferred droplets is not particularly limited but is preferably 1.3 times or less the diameter of the welding wire in view of stability of droplets suspended from the wire.

By using a steel welding wire formed of a steel wire added with REM and performing gas-shielded arc welding with electrode negative polarity, it is possible to achieve a smaller minimum diameter $D_{MIN}$ of transferred droplets than the steel welding wire (see Reference Document 1).

Reference Document 1: Japanese Unexamined Patent Application Publication No. 2004-188428

Meanwhile, when gas-shielded arc welding is performed with electrode positive polarity by using a common steel welding wire, it is difficult to obtain preventive effects on spatter formation in a stable manner since the diameter of transferred droplets varies widely depending on changes in welding current.

Moreover, to reduce the amount of formed spatter in the laser-arc hybrid welding of the present invention, a maximum diameter $D_{MAX}$ (mm) of droplets transferred from the steel welding wire to the molten pool generated by the gas-shielded arc welding needs to satisfy the following expression (2) relative to an arc length M (mm) in the gas-shielded arc welding.

$$M \geq 4D_{MAX}/3 \quad (2)$$

When the maximum diameter $D_{MAX}$ (mm) of transferred droplets does not satisfy expression (2) (i.e., when M exceeds the value in the right-hand side), the maximum diameter $D_{MAX}$ of droplets is excessively large. Consequently, droplets suspended from the tip of the steel welding wire short-circuit with the molten pool and form spatter when such short-circuiting discontinues. Accordingly, to prevent spatter of (b) above, an adjustment is needed to satisfy expression (2), which is an indicator for assessing interactions between the maximum diameter $D_{MAX}$ of droplets and the arc length M in the gas-shielded arc welding. In other words, is it possible to prevent short-circuiting by satisfactorily shorten droplets compared with the arc length M.

The arc length M varies corresponding to the potential frequency of the shielding gas, and the potential frequency of the shielding gas varies depending on components of the shielding gas. Accordingly, by adjusting components of the shielding gas, the arc length M can be controlled. Specifically, since the potential gradient of Ar is 0.5 V/cm and the potential gradient of $CO_2$ is 1.5 V/cm, the arc length M can be extended by increasing Ar content in the shielding gas.

Here, the minimum diameter $D_{MIN}$ and the maximum diameter $D_{MAX}$ of transferred droplets as well as the arc length M will be described.

The transfer phenomenon of droplets is imaged for one second by using a high-speed camera in any portion excluding a 10 mm-portion from the welding start end in the welding direction and a 10 mm-portion from the welding termination end in the direction opposite to the welding direction while performing bead-on-plate welding as illustrated in Fig. 1. Among the obtained images, images immediately after detachment of the droplet 1 from the steel welding wire 2 are extracted and analyzed to determine the droplet diameter immediately after detachment in each image (the droplet diameter is calculated as an average of the diameter in the horizontal direction and the diameter in the perpendicular direction relative to the traveling direction in welding).

Among the thus-calculated many droplet diameters, the smallest value is set as the minimum diameter and the largest value is set as the maximum diameter. Further, the similar bead-on-plate welding and image analysis are repeated 10 times, and an average of the obtained ten minimum diameters is set as the minimum diameter $D_{MIN}$ (mm) and an average of the obtained 10 maximum diameters is set as the maximum diameter $D_{MAX}$ (mm).

Moreover, the respective images obtained in the above-described bead-on-plate welding immediately after detachment of the droplet 1 from the steel welding wire 2 are analyzed to determine a distance from the tip of the steel welding wire 2 to the molten pool 8 (i.e., the length of the straight line parallel to the axial direction of the steel welding wire 2 from the tip of the steel welding wire to the molten pool), and the average is set as a measured result. Further, the similar bead-on-plate welding is repeated 10 times, and an average of the obtained 10 measured results is set as the arc length M (mm).

Next, the components of the steel welding wire used in the present invention will be described.

REM: 0.015 to 0.100 mass%

REM is an element effective in forming fine inclusions during steelmaking and casting and in improving the toughness of weld metal. In addition, in electrode negative gas-shielded arc welding, REM is an element indispensable for forming fine droplets and stabilizing transfer thereof and has an effect of achieving deep penetration. In laser-arc hybrid welding as illustrated in Fig. 1, REM can thus melt blowholes formed by leading laser welding again to allow the blowholes to surface as air bubbles, thereby reducing welding defects. When REM content is less than 0.015 mass%, an effect of reducing spatter or reducing welding defects cannot be obtained. Meanwhile, when REM content exceeds 0.100 mass%, cracking arises in the manufacturing process for a steel welding wire and/or deterioration in toughness of weld metal results. Accordingly, REM content preferably satisfies the range of 0.015 to 0.100 mass%. More preferably, REM content is 0.025 to 0.050 mass%.

Herein, REM is a general term for Group 3 elements in the periodic table. In the present invention, elements of atomic number 57 to 71 are preferably used, and Ce and La are particularly suitable. When Ce and/or La are to be added to a steel welding wire, Ce or La may be added alone or Ce and La may be used in combination. When both Ce and La are to be added, it is preferable to use a mixture obtained in advance by mixing within ranges of Ce: 40 to 90 mass% and La: 10 to 60 mass%.

In the present invention, a steel welding wire containing basic components of C, Si, Mn, P, and S as described hereinafter is preferably used.

C: 0.20 mass% or less

C is an element necessary for ensuring the strength of weld metal and has an effect of lowering the viscosity of molten metal and thus enhancing the flowability. However, when C content exceeds 0.20 mass%, not only is the behavior of droplets and molten metal destabilized in electrode negative welding, but also deterioration in toughness of weld metal results in some cases. Accordingly, C content preferably satisfies 0.20 mass% or less. Meanwhile, when C content is excessively reduced, the strength of weld metal cannot be ensured in some cases. Accordingly, C content is more preferably set to 0.003 to 0.20 mass%. Further preferably, C content is 0.01 to 0.10 mass%.

Si: 0.05 to 2.5 mass%

Si is an element that has a deoxidizing action and is thus indispensable for deoxidization of molten metal. In gas-shielded arc welding, when Si content is less than 0.05 mass%, blowholes are formed in weld metal in some cases due to insufficient deoxidization of the molten metal. In addition, Si also has an effect of suppressing expansion of an arc in electrode negative gas-shielded arc welding, thereby forming fine droplets and stabilizing the behavior thereof. Meanwhile, when Si content exceeds 2.5 mass%, the toughness of weld metal deteriorates considerably in some cases. Accordingly, Si content is preferably within the range of 0.05 to 2.5 mass%. Here, when Si content exceeds 0.65 mass%, small-particle spatter tends to increase. Accordingly, Si content is further preferably within the range of 0.05 to 0.65 mass%.

Mn: 0.25 to 3.5 mass%

Mn is an element that has a deoxidizing action in a similar manner to Si and is thus indispensable for deoxidization of molten metal. When Mn content is less than 0.25 mass%, blowholes are formed in weld metal in some cases due to insufficient deoxidization of the molten metal. Meanwhile, when Mn content exceeds 3.5 mass%, the toughness of weld metal deteriorates in some cases. Accordingly, Mn content is preferably within the range of 0.25 to 3.5 mass%. Here, to promote deoxidization of molten metal and prevent blowholes, Mn content is desirably 0.45 mass% or more. Accordingly, Mn content is further preferably set to 0.45 to 3.5 mass%.

P: 0.05 mass% or less

P is an element that enhances melting efficiency by lowering the melting point of steel while increasing the electrical resistivity. In addition, in electrode negative gas-shielded arc welding, P also has an effect of forming fine droplets and stabilizing an arc. However, when P content exceeds 0.05 mass%, small-particle spatter increases in electrode negative gas-shielded arc welding in some cases due to considerably lowered viscosity of molten metal and resulting destabilization of an arc. Moreover, there is an increasing risk of causing hot cracks in weld metal in some cases. Accordingly, P content is preferably 0.05 mass% or less. More preferably, P content is 0.03 mass% or less. Meanwhile, since it takes long time to reduce P in the steelmaking stage for refining steel as a raw material of a steel welding wire, P content is desirably 0.002 mass% or more from a viewpoint of enhancing productivity. Accordingly, P content is further preferably set to 0.002 to 0.03 mass%.

S: 0.02 mass% or less

S lowers the viscosity of molten metal, promotes detachment of droplets suspended from the tip of a steel welding wire, and stabilizes an arc in electrode negative gas-shielded arc welding. In addition, S also has an effect of expanding an arc in electrode negative gas-shielded arc welding, lowering the viscosity of molten metal, and leveling beads. However, when S content exceeds 0.02 mass%, small-particle spatter increases and the toughness of weld metal deteriorates in some cases. Accordingly, S content is preferably 0.02 mass% or less. Meanwhile, since it takes long time to reduce S in the steelmaking stage for refining steel as a raw material of a steel welding wire, S content is desirably 0.002 mass% or more from a viewpoint of enhancing productivity. Accordingly, S content is further preferably set to 0.002 to 0.02 mass%.

Further, in the present invention, the steel welding wire preferably contains one or two or more selected from Ti, Zr, O, Ca, and Al, in addition to the above-described composition.

One or Two of Ti: 0.02 to 0.50 mass% and Zr: 0.02 to 0.50 mass%

Both Ti and Zr are elements that act as a strong deoxidizer and increase the strength of weld metal. In addition, Ti and Zr have an effect of stabilizing the bead shape (i.e., suppressing humping bead) by suppressing lowering in viscosity through deoxidization of molten metal. Due to such an effect, Ti and Zr are effective elements in high-current welding at 350 A or higher and may be added as necessary. When Ti content is less than 0.02 mass% and/or Zr content is less than 0.02 mass%, such an effect cannot be obtained. Meanwhile, when Ti content exceeds 0.50 mass% and/or Zr content exceeds 0.50 mass%, droplets coarsen, thereby forming a lot of large-particle spatter in some cases. Accordingly, if Ti and/or Zr are contained, Ti is preferably within the range of 0.02 to 0.50 mass% and Zr is preferably within the range of 0.02 to 0.50 mass%.

O: 0.0080 mass% or less

O acts to destabilize an arc spot formed in a droplet suspended from the tip of a steel welding wire in electrode negative gas-shielded arc welding as well as to destabilize the behavior of droplets. When O content exceeds 0.0080 mass%, the effect of concentrating and stabilizing an arc by REM addition in electrode negative high-current welding is impaired, thereby increasing shaking of droplets and forming a lot of spatter in some cases. In addition, a problem of residual welding defects arises in a laser-arc hybrid welding method in some cases since blowholes formed by leading laser welding cannot be melted again. Accordingly, O content is preferably set to 0.0080 mass% or less. Meanwhile, when O content is less than 0.0010 mass%, it is impossible to satisfactorily obtain an effect of improving droplet detachment properties due to lowered viscosity through O addition. Accordingly, if O is contained, O content is preferably 0.0010 to 0.0080 mass%. Further preferably, O content is 0.0010 to 0.0050 mass%.

Ca: 0.0008 mass% or less

Ca is incorporated into molten steel as an impurity during steelmaking and casting or incorporated into a steel welding wire as an impurity during wire drawing. In electrode negative gas-shielded arc welding, when Ca content exceeds 0.0008 mass%, the effect of concentrating and stabilizing an arc by REM addition in high-current welding is impaired. Accordingly, if Ca is contained, Ca content is preferably 0.0008 mass% or less.

Al: 0.005 to 3.00 mass%

Al is an element that acts as a strong deoxidizer and increases the strength of weld metal. In addition, Al has an effect of stabilizing the bead shape (i.e., suppressing humping bead) by lowering viscosity through deoxidization of weld metal. In electrode positive gas-shielded arc welding, a clear stabilizing effect on droplet transfer is not observed for Al. However, Al remarkably exerts a stabilizing effect on droplet transfer in high-current gas-shielded arc welding at 350 A or higher as electrode negative gas-shielded arc welding. Meanwhile, Al can increase the frequency of short-circuit transfer, thereby achieving uniform droplet transfer and an improved bead shape in low-current welding. Moreover, due to affinity with O, Al also has an effect of reducing oxidation loss of REM in the manufacturing stage for a steel welding wire. When Al content is less than 0.005 mass%, such an effect cannot be obtained. Meanwhile, when Al content exceeds 3.00 mass%, crystal grains of weld metal coarsen, thereby considerably impairing toughness in some cases. Accordingly, if Al is contained, Al content is preferably within the range of 0.005 to 3.00 mass%.

The effects of the present invention do not diminish even if the following elements are further added as necessary.

Cr: 0.02 to 3.0 mass%, Ni: 0.05 to 3.0 mass%, Mo: 0.05 to 1.5 mass%, Cu: 0.05 to 3.0 mass%, B: 0.0005 to 0.015 mass%, Mg: 0.001 to 0.20 mass%, Nb: 0.005 to 0.5 mass%, V: 0.005 to 0.5 mass%

All of Cr, Ni, Mo, Cu, B, and Mg are elements that increase the strength of weld metal and enhance weatherability. When the contents of these elements are very small, such effects cannot be obtained. Meanwhile, excessive addition of these elements results in deterioration in toughness of weld metal. Accordingly, if Cr, Ni, Mo, Cu, B, and/or Mg are contained, the respective preferable ranges are within Cr: 0.02 to 3.0 mass%, Ni: 0.05 to 3.0 mass%, Mo: 0.05 to 1.5 mass%, Cu: 0.05 to 3.0 mass%, B: 0.0005 to 0.015 mass%, and Mg: 0.001 to 0.20 mass%.

Nb: 0.005 to 0.5 mass%, V: 0.005 to 0.5 mass%

Both Nb and V are elements that enhance the strength and toughness of weld metal and improve the stability of an arc. When the contents of these elements are very small, such effects cannot be obtained. Meanwhile, excessive addition of these elements results in deterioration in toughness of weld metal. Accordingly, if Nb and/or V are contained, it is preferable to satisfy the respective ranges of Nb: 0.005 to 0.5 mass% and V: 0.005 to 0.5 mass%.

The balance other than the above-described components of a steel welding wire is Fe and incidental impurities. For example, N, which is a representative incidental impurity incidentally incorporated in the refining stage for steel or the manufacturing stage for a steel welding wire, is preferably reduced to 0.020 mass% or less.

Next, the welding conditions of the present invention will be described.

As in the foregoing, the arc length M can be controlled by adjusting the components of a shielding gas. The arc length M varies corresponding to the potential frequency of a shielding gas. Accordingly, to further remarkably obtain the effects of the present invention, it is preferable to increase Ar content in a shielding gas.

A gas containing 60 volume% or more of Ar is used as a shielding gas. When a gas containing less than 60 volume% of Ar is used as a shielding gas, there is a risk of failing to satisfy expression (2) due to a short arc length. The balance of a shielding gas (i.e., 40 volume% or less) preferably contains 15 volume% or more of one or more gases of $CO_2$ and $O_2$ through mixing. The extension of a steel welding wire is preferably 15 to 30 mm. The wire diameter is preferably 0.8 to 1.6 mm. Here, for example, when the wire diameter is 1.2 mm, the welding current in gas-shielded arc welding is preferably 150 to 500 A and the welding voltage is preferably 25 to 38 V (the welding voltage increases together with the welding current).

Meanwhile, a shielding gas the same as the above-described shielding gas for gas-shielded arc welding is used as a shielding gas for laser welding. Preferably, the laser power in laser welding is 2 kW or more and the depth of focus in laser welding is -2 to +10 mm. The focused spot size in laser welding varies depending on gaps but is preferably 2 mm or less.

The welding speed in laser-arc hybrid welding is preferably 150 to 400 cm/min, and the distance between the focal point of a laser beam and the arc spot in gas-shielded arc welding is preferably 2 to 7 mm

EXAMPLES

As the laser-arc hybrid welding of the present invention, bead-on-plate welding was performed on 3 mm-thick steel sheets by combining leading YAG laser welding and trailing electrode negative gas-shielded arc welding (see Fig. 1), where the gas-shielded arc welding used a steel welding wire containing REM in the components of a steel welding wire that corresponds to JIS Z 3312 YGW11 as a base and used Ar-20 volume% $CO_2$ as a shielding gas. This is Inventive Example.

Next, for purposes of comparison, welding (Comparative Example 1) of combined YAG laser welding and electrode negative gas-shielded arc welding using a steel welding wire of the same components and 100 volume% of $CO_2$ as a shielding gas; and welding (Comparative Example 2) of combined YAG laser welding and MAG welding, which is common gas-shielded arc welding that is considered to involve stable droplet transfer, were each performed. Table 1 shows the components of the steel welding wire used in the Example and Comparative Examples 1 and 2. The welding conditions are as shown in Table 2.

[Table 1]

| No. | C | Si | Mn | P | S | Ti | REM |
|-----|------|-----|-----|------|------|-----|------|
| 1 | 0.05 | 0.7 | 1.6 | 0.01 | 0.01 | 0.2 | 0.04 |
| unit: mass% | | | | | | | |

[Table 2]

| | | | Inventive Ex. | Comp. Ex. 1 | Comp. Ex. 2 |
|---|---|---|---|---|---|
| Steel sheet | Steel | | SN490B | | |
| | Thickness | | 3 mm | | |
| Shielding gas | Type | | Ar-20%$CO_2$ | 100%$CO_2$ | Ar-20%$CO_2$ |
| | Flow rate | | 20 L/min | | |
| Welding | Distance between laser focal point and arc spot | | 2 mm | | |
| | Welding speed | | 3.0 m/min | | |
| | Laser welding | Laser | YAG laser | | |
| | | Power | 4.5 kW, 6.0 kW | | |
| | | Focused spot size | 0.6 mm | | |
| | | Depth of focus | 0 mm | | |
| | | Irradiation angle | 90° | | |
| | Gas-shielded arc welding | Welding voltage | 28 to 32 V | | |
| | | Welding current | 220 to 280 A | | |
| | | Wire extension | 15 mm | | |
| | | Wire diameter | 1.2 mm | | |
| | | Polarity | Electrode negative | | Electrode positive |
| | | Torch angle | 60° | | |

For the Inventive Example and Comparative Examples 1 and 2, the maximum diameter $D_{MAX}$ and the minimum diameter $D_{MIN}$ of droplets transferred to a molten pool as well as the arc length M were each examined by the foregoing measurement method. The results are shown in Table 3. In addition, it was evaluated whether expression (1) and expression (2) are satisfied (○) or not (×), and the results are shown in Table 3.

[Table 3]

| | Welding current (A) | Laser power P (kW) | Droplets | | Arc length M (mm) | Expression (1) | Expression (2) | Spatter | |
|---|---|---|---|---|---|---|---|---|---|
| | | | Maximum diameter $D_{MAX}$ (mm) | Minimum diameter $D_{MIN}$ (mm) | | | | Formed amount (9) | Evaluation [*1] |
| Inventive Ex. | 220 | 4.5 | 1.44 | 1.04 | 1.93 | ○ | ○ | 0.5 | ○ |
| | 250 | 4.5 | 1.17 | 1.04 | 2.01 | ○ | ○ | 0.5 | ○ |
| | 280 | 4.5 | 1.11 | 0.98 | 2.14 | ○ | ○ | 0.3 | ○ |
| | 340 | 4.5 | 1.08 | 0.88 | 2.21 | ○ | ○ | 0.3 | ○ |
| | 280 | 6.0 | 1.21 | 1.03 | 2.16 | ○ | ○ | 0.5 | ○ |
| Comp. Ex. 1 | 220 | 4.5 | 6.14 | 1.32 | 1.10 | ○ | × | 2.3 | × |
| | 250 | 4.5 | 1.18 | 1.02 | 0.85 | ○ | × | 1.3 | × |
| | 280 | 4.5 | 1.11 | 0.89 | 0.93 | ○ | × | 0.9 | Δ |
| | 340 | 4.5 | 0.97 | 0.62 | 0.84 | × | × | 1.8 | × |
| | 280 | 6.0 | 1.14 | 0.94 | 1.05 | ○ | × | 1.2 | × |
| Comp. Ex. 2 | 220 | 4.5 | 2.14 | 0.85 | 2.45 | ○ | × | 1.5 | × |
| | 250 | 4.5 | 1.89 | 0.65 | 2.67 | × | ○ | 1.4 | × |
| | 280 | 4.5 | 1.74 | 0.52 | 2.91 | × | ○ | 1.8 | × |
| | 340 | 4.5 | 0.94 | 0.45 | 2.20 | × | ○ | 1.9 | × |
| | 280 | 6.0 | 1.65 | 0.45 | 2.84 | × | ○ | 2.3 | × |

*1: weight of less than 0.6 g: ○
weight of 0.6 g or more and less than 1.2 g: Δ
weight of 1.2 g or more: ×

Further, the measured results for the amount of formed spatter are also shown in Table 3. The amount of formed spatter was measured by performing laser-arc hybrid welding of the Inventive Example and Comparative Examples 1 and 2 for a 500 mm length inside a Cu container for collecting spatter, collecting formed spatter during welding, and measuring the weight. The weight was evaluated as satisfactory (○) for less than 0.6 g, as acceptable (Δ) for 0.6 g or more and less than 1.2 g, and as unacceptable (×) for 1.2 g or more.

As is clear from Table 3, when the evaluation of both expression (1) and expression (2) is ○, the evaluation of the amount of formed spatter was also satisfactory (O). In other words, from the results for the amount of formed spatter in the Inventive Example, spatter formation was confirmed to be suppressed in a wide current region. In particular, welding spatter was reduced to about 22% of Comparative Example 1 in a low welding current region (220 A).

Therefore, according to the present invention, it is possible in laser-arc hybrid welding to suppress spatter formation by maintaining a proper diameter of droplets that are transferred to a molten pool in gas-shielded arc welding as well as a proper arc length. Further, the effect of suppressing spatter formation was remarkably exerted by performing electrode negative gas-shielded arc welding using a steel welding wire containing 0.015 to 0.100 mass% of REM in an atmosphere of a shielding gas containing 60 volume% or more of Ar.

Reference Signs List

1   Droplet
2   Steel welding wire
3   Torch
4   Arc
5   Focusing lens
6   Protective lens

7 Laser beam
8 Molten pool
9 Steel sheet

**Claims**

1. A laser-arc hybrid welding method of performing welding by combining leading laser welding and trailing gas-shielded arc welding,
   wherein:

   a minimum diameter $D_{MIN}$ (mm) of droplets that are transferred from a steel welding wire to a molten pool generated by the gas-shielded arc welding satisfies expression (1) relative to a power P (kW) of a laser beam generated by the laser welding; and a maximum diameter $D_{MAX}$ (mm) of the droplets satisfies expression (2) relative to a length M (mm) of an arc generated by the gas-shielded arc welding;

   $$D_{MIN} \geq (P/15) + (1/2) \quad (1)$$

   $$M \geq 4D_{MAX}/3 \quad (2),$$

   and in the laser welding, the same shielding gas as for the gas-shielded arc welding is used,
   wherein in the gas-shielded arc welding, a shielding gas containing 60 volume% or more of Ar is used; the steel welding wire formed of a steel wire containing 0.015 to 0.100 mass% of a rare earth element or elements is used; and welding is performed with electrode negative polarity.

**Patentansprüche**

1. Laser-Lichtbogen-Hybridschweißverfahren zum Durchführen von Schweißen durch Kombinieren von vorlaufendem Laserschweißen und nachlaufendem Schutzgasschweißen,
   wobei:

   ein Mindestdurchmesser $D_{MIN}$ (mm) von Tropfen, die von einem Stahlschweißdraht in ein durch das Schutzgasschweißen erzeugtes Schmelzbad übertragen werden, den Ausdruck (1) in Bezug auf eine Leistung P (kW) eines durch das Laserschweißen erzeugten Laserstrahls erfüllt; und ein Maximaldurchmesser $D_{MAX}$ (mm) der Tropfen den Ausdruck (2) in Bezug auf eine Länge M (mm) eines durch das Schutzgasschweißen erzeugten Lichtbogens erfüllt;

   $$D_{MIN} \geq (P/15) + (1/2) \quad (1)$$

   $$M \geq 4D_{MAX}/3 \quad (2),$$

   und beim Laserschweißen das gleiche Schutzgas wie für das Schutzgasschweißen verwendet wird,
   wobei beim Schutzgasschweißen ein Schutzgas verwendet wird, das 60 Vol.-% oder mehr Ar enthält; der Stahlschweißdraht, der aus einem Stahldraht gebildet ist, welcher 0,015 bis 0,100 Massen-% eines Seltenerdelements oder von Seltenerdelementen enthält,
   verwendet wird; und das Schweißen mit negativer Elektrodenpolarität durchgeführt wird.

**Revendications**

1. Procédé de soudage hybride au laser à l'arc permettant de réaliser un soudage en combinant un soudage au laser au début et un soudage à l'arc sous protection gazeuse à la fin,
   dans lequel :

   un diamètre minimal $D_{MIN}$ (mm) des gouttelettes qui sont transférées d'un fil de soudage en acier à un bain de fusion généré par le soudage à l'arc sous protection gazeuse satisfait à l'expression (1) par rapport à une puissance P (kW) d'un faisceau laser généré par le soudage au laser ; et un diamètre maximal $D_{MAX}$ (mm) des gouttelettes satisfait à l'expression (2) par rapport à une longueur M (mm) d'un arc généré par le soudage à l'arc sous protection gazeuse ;

$$D_{MIN} \geq (P/15) + (1/2) \quad (1)$$

$$M \geq 4 D_{MAX}/3 \quad (2),$$

et pendant le soudage au laser est utilisé le même gaz de protection que pour le soudage à l'arc sous protection gazeuse,
dans lequel pendant le soudage à l'arc sous protection gazeuse est utilisé un gaz de protection contenant 60 % en volume ou
plus d'Ar ; le fil de soudage en acier formé d'un fil en acier contenant de 0,015 à 0,100 % en masse d'un ou plusieurs éléments de terres rares est utilisé ; et le soudage est effectué avec une polarité négative d'électrode.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005219062 A
- JP 2006075847 A
- JP 2004188428 A